# EUROPEAN PATENT APPLICATION

(11) **EP 3 090 624 A1**
(43) Date of publication of application: **09.11.2016**
(21) Application number: 16168340.4
(22) Date of filing: 04.05.2016
(51) Int. Cl.: A01G 1/00

(54) **PLANT VARIETY RECOMMENDATION METHOD AND APPARATUS**

(30) Priority: 04.05.2015 CN 201510221874
(71) Applicant: Xiaomi Inc., Beijing 100085 (CN)
(72) Inventor: WU, Ke, 100085 BEIJING (CN); LIU, Xinyu, 100085 BEIJING (CN)
(74) Representative: Delumeau, François Guy

(57) **Abstract**

The present disclosure relates to a plant variety recommendation method and apparatus, to prolong life cycle of a plant. The method includes: determining (S101) an environmental parameter of an environment where a flower pot is located; and recommending (S102) a plant variety matching with the environmental parameter to the flower pot. According to the technical solutions of the present disclosure, a user may cultivate a plant matching with the environmental parameter in a flower pot, such that the plant grows according to growth habits thereof. This prevents the user from frequently buying plants for the same flower pot, and thus reduces the user's economic cost in buying plants.

## Description

### TECHNICAL FIELD

The present disclosure relates to the field of Internet technologies, and more particularly, to a plant variety recommendation method and apparatus.

### BACKGROUND

With the advancement of living quality, users are imposing higher and higher requirements on living environments. Cultivating flowers and plants in rooms not only beautifies the living environments, but also improves the air quality in the rooms. However, due to restriction of the cultivation conditions, the plants are generally cultivated in flower pots. The flower pots are subjected to different environments due to their different locations. For example, plants that are cultivated in balconies generally enjoy a relatively long light irradiation duration, whereas plants that are cultivated at corners of bedrooms are subjected to a relatively short light irradiation duration. Therefore, when the users fail to cultivate the plants according to the growth habits, those plants would be gradually withered to death. For the users, buying plants again increases the economic cost. In addition, ill growth of the plants also reduces the users' enthusiasm in cultivating flowers and plants.

### SUMMARY

To solve the problems existent in the related art, embodiments of the present disclosure provide a plant variety recommendation method and apparatus, to prolong life cycle of a plant.

According to a first aspect of embodiments of the present disclosure, a plant variety recommendation method is provided. The method includes:
determining an environmental parameter of an environment where a flower pot is located; and
recommending a plant variety matching with the environmental parameter to the flower pot.

In one embodiment, the method may further include:
determining a geographical location of the flower pot;
determining a temperature variation curve corresponding to the geographical location; and
recommending a plant variety matching with the temperature variation curve to the flower pot.

In one embodiment, the recommending a plant variety matching with the environmental parameter to the flower pot may include:
searching for a plant variety matching with the environmental parameter from a plant database; and
recommending the matched plant variety to the flower pot.

In one embodiment, the method may further include:
determining a cultivation pattern of the plant variety according to the environmental parameter.

In one embodiment, the method may further include:
determining a pollutant index of the environment where the flower pot is located; and
recommending a plant variety matching with the pollutant index to the flower pot.

In one embodiment, the method may further include:
determining a ventilation indicator of the environment where the flower pot is located; and
recommending a plant variety matching with the ventilation indicator to the flower pot.

In one embodiment, the method may further include:
determining a water quality parameter of the flower pot; and
recommending a plant variety matching with the water quality parameter to the flower pot.

According to a second aspect of embodiments of the present disclosure, a plant variety recommendation apparatus is provided. The apparatus includes:
a first determining module, configured to determine an environmental parameter of an environment where a flower pot is located; and
a first recommending module, configured to recommend a plant variety matching with the environmental parameter determined by the first determining module to the flower pot.

In one embodiment, the apparatus may further include:
a second determining module, configured to determine a geographical location of the flower pot;
a third determining module, configured to determine a temperature variation curve corresponding to the geographical location determined by the second determining module; and
a second recommending module, configured to recommend a plant variety matching with the temperature variation curve determined by the third determining module to the flower pot.

In one embodiment, the first recommending module may include:
a searching submodule, configured to search for a plant variety matching with the environmental parameter determined by the first determining module from a plant database; and
a recommending submodule, configured to recommend the matched plant variety searched by the searching submodule to the flower pot.

In one embodiment, the apparatus may further include:
a third recommending module, configured to determine a cultivation pattern of the plant variety according to the environmental parameter determined by the first determining module.

In one embodiment, the apparatus may further include:
a fourth determining module, configured to determine a pollutant index of the environment where the flower pot is located; and
the first recommending module is configured to recommend a plant variety matching with the pollutant index determined by the fourth determining module to the flower pot.

In one embodiment, the apparatus may further include:
a fifth determining module, configured to determine a ventilation indicator of the environment where the flower pot is located; and
the first recommending module is configured to recommend a plant variety matching with the ventilation indicator determined by the fifth determining module to the flower pot.

In one embodiment, the apparatus may further include:
a sixth determining module, configured to determine a water quality parameter of the flower pot; and
the first recommending module is configured to recommend a plant variety matching with the water quality parameter determined by the sixth determining module to the flower pot.

According to a third aspect of embodiments of the present disclosure, an apparatus for use in plant variety recommendation is provided. The apparatus includes:
a processor; and
a memory for storing instructions executable by the processor;
wherein the processor is configured to:
   determine an environmental parameter of an environment where a flower pot is located; and
   recommend a plant variety matching with the environmental parameter to the flower pot.

In one particular embodiment, the steps of the plant variety recommendation method are determined by computer program instructions.

Consequently, according to a fourth aspect, the invention is also directed to a computer program for executing the steps of a plant variety recommendation method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a hard disk.

Alternatively, the information medium can be an integrated circuit in which the program is incorporated, the circuit being adapted to execute the method in question or to be used in its execution.

The technical solutions provided by the embodiments of the present disclosure achieve the following beneficial effects. A plant variety matching with the environmental parameter of the environment where the flower pot is located is recommended to the flower pot, such that a user may cultivate a plant matching with the environmental parameter in the flower pot, and hence the plant grows according to growth habits thereof. This prevents the user from frequently buying plants for the same flower pot, and thus reduces the user's economic cost in buying plants. In addition, since the cultivation of the plant completely complies with the growth habits thereof, good growth of the plant may improve the user's enthusiasm in cultivating flowers and plants.

It shall be appreciated that the above general description and the detailed description hereinafter are only illustrative and interpretative, but not for limiting the present disclosure.

### BRIEF DESCRIPTION OF THE DRAWINGS

The accompanying drawings herein, which are incorporated into and constitute a part of the specification, illustrate embodiments consistent with the present disclosure, and together with the specification, serve to explain the principles of the present disclosure.
Fig. 1A is a flowchart illustrating a plant variety recommendation method according to an example embodiment of the present disclosure;
Fig. 1B is a diagram illustrating one application scenario of a plant variety recommendation method according to an example embodiment of the present disclosure;
Fig. 1C is a diagram illustrating another application scenario of a plant variety recommendation method according to an example embodiment of the present disclosure;
Fig. 2A is a flowchart illustrating a plant variety recommendation method according to example embodiment 1 of the present disclosure;
Fig. 2B is a schematic diagram illustrating a temperature variation curve according to example embodiment 1 of the present disclosure;
Fig. 3 is a flowchart illustrating a plant variety recommendation method according to example embodiment 2 of the present disclosure;
Fig. 4 is a flowchart illustrating a plant variety recommendation method according to example embodiment 3 of the present disclosure;
Fig. 5 is a block diagram illustrating a plant variety recommendation apparatus according to an example embodiment of the present disclosure;
Fig. 6 is a block diagram illustrating another plant variety recommendation apparatus according to an example embodiment of the present disclosure; and
Fig. 7 is a block diagram illustrating an apparatus for use in plant variety recommendation according to an example embodiment of the present disclosure.

### DETAILED DESCRIPTION

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the present disclosure. Instead, they are merely examples of apparatuses and methods consistent with aspects related to the present disclosure as recited in the appended claims.

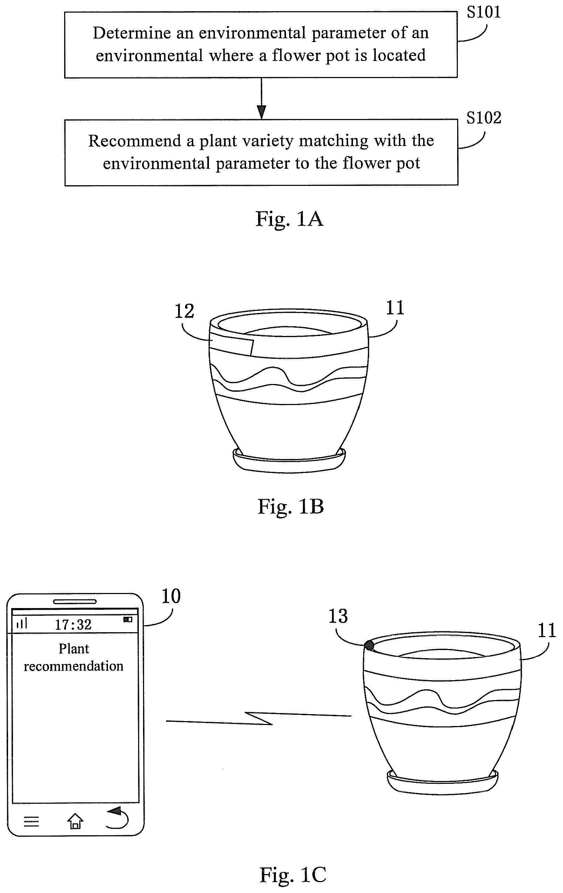

Fig. 1A is a flowchart illustrating a plant variety recommendation method according to an example embodiment of the present disclosure. Fig. 1B is a diagram illustrating one application scenario of a plant variety recommendation method according to an example embodiment of the present disclosure. Fig. 1C is a diagram illustrating another application scenario of a plant variety recommendation method according to an example embodiment of the present disclosure. The plant variety recommendation method may be applied in a terminal device (for example, a smart phone, a tablet computer, a desktop computer), and may be implemented by means of installing an application in the terminal device or installing software in the desktop computer. As illustrated in Fig. 1A, the plant variety recommendation method includes the following steps S101 to S102.

In step S101, an environmental parameter of an environment where a flower pot is located is determined

In one embodiment, as illustrated in Fig. 1B, a flower pot 11 is provided with a terminal device 12. The terminal device 12 may sense the environmental parameter of the environment where the flower pot 11 is located. In one embodiment, the environmental parameters sensed by the terminal device 12 may include: a sunshine irradiation duration within a defined time period, a highest temperature value and a lowest temperature value within a defined time period, a maximum humidity value and a minimum humidity value within a defined time period, and the like. In addition, the terminal device 12 may further include a display module (not shown in the drawings). The environmental parameters of the flower pot may be displayed on the display module, such that the user is capable of visually reading the environmental parameters of the flower pot.

In another embodiment, as illustrated in Fig. 1C, the flower pot 11 is provided with a sensor apparatus 13. The sensor apparatus 13 is communicatively connected to a smart device 10. In one embodiment, the sensor apparatus 13 may include a light irradiation sensor, a temperature sensor, and a humidity sensor. The light irradiation sensor is configured to detect a sunshine irradiation duration of the flower pot within a defined time period (for example, within one day or within one year). The temperature sensor is configured to detect a temperature curve of the flower pot within a defined time period. The humidity sensor is configured to detect a humidity curve of the flower pot within a defined time period. The environmental parameter may include: a sunshine irradiation duration within a defined time period, a highest temperature value and a lowest temperature value within a defined time period, and a maximum humidity value and a minimum humidity value within a defined time period. For example, the sunshine irradiation condition of the location of the flower pot, whether the sunshine is shaded by buildings, and the orientation of the flower pot may be determined according to the sunshine irradiation duration; the temperature and temperature difference of the location of the flower pot may be determined according to the highest temperature value and the lowest temperature value, for example, the flower pot at the top floor of a building is subjected to a great temperature difference, and the indoor flower pot is subjected to a small temperature variation, and the flower pot in the heat-fed room is subjected to a small temperature difference; and the humidity and humidity variation of the location of the flower pot may be determined according to the maximum humidity value and the minimum humidity value.

In step S102, a plant variety matching with the environmental parameter is recommended to the flower pot.

In one embodiment, the plant variety matching with the environmental parameter may be determined based on a plant database. For example, for flower pots placed in different locations, suitable plant varieties may be determined according to their respective different environmental parameters and recommended to the flower pots. Since the environmental parameters are different, plant varieties more suitable for the environments of the flower pots may be recommended to the flower pots according to the environmental parameters, such that the plants cultivated in the flower pots grow healthily. In one embodiment, the recommended plant variety may be displayed on a display module of the terminal device 12 as illustrated in Fig. 1B. In another embodiment, the recommended plant variety may be displayed on a display screen of the smart phone 10 as illustrated in Fig. 1C. Through display of the plant variety, the user is capable of directly determining a plant variety matching with the flower pot. In one embodiment, the recommended plant variety may be played by using a voice playing module on the terminal device 12 as illustrated in Fig. 1B. In another embodiment, the recommended plant variety may be played by using a player of the smart phone 10 as illustrated in Fig. 1C.

In this embodiment, a plant variety matching with the environmental parameter of the environment where the flower pot is located is recommended to the flower pot, such that a user may cultivate a plant matching with the environmental parameter in a flower pot, and hence the plant grows according to growth habits thereof. This prevents the user from frequently buying plants for the same flower pot, and thus reduces the user's economic cost in buying plants. In addition, since the cultivation of the plant completely complies with the growth habits thereof, good growth of the plant may improve the user's enthusiasm in cultivating flowers and plants.

In one embodiment, the method may further include:
determining a geographical location of the flower pot;
determining a temperature variation curve corresponding to the geographical location; and
recommending a plant variety matching with the temperature variation curve to the flower pot.

In one embodiment, the recommending a plant variety matching with the environmental parameter to the flower pot may include:
searching for a plant variety matching with the environmental parameter from a plant database; and
recommending the matched plant variety to the flower pot.

In one embodiment, the method may further include:
determining a cultivation pattern of the plant variety according to the environmental parameter.

In one embodiment, the method may further include:
determining a pollutant index of the environment where the flower pot is located; and
recommending a plant variety matching with the pollutant index to the flower pot.

In one embodiment, the method may further include:
determining a ventilation indicator of the environment where the flower pot is located; and
recommending a plant variety matching with the ventilation indicator to the flower pot.

In one embodiment, the method may further include:
determining a water quality parameter of the flower pot; and
recommending a plant variety matching with the water quality parameter to the flower pot.

For details about how to recommend a plant variety to the flower pot, reference may be made to the embodiments described hereinafter.

In conclusion, according to the method provided by the embodiment of the present disclosure, a plant grows according to growth habits thereof. This prevents the user from frequently buying plants for the same flower pot, and thus reduces the user's economic cost in buying plants. In addition, since the cultivation of the plant completely complies with the growth habits thereof, good growth of the plant may improve the user's enthusiasm in cultivating flowers and plants.

Hereinafter, the technical solutions of the embodiments of the present disclosure are described with reference to specific embodiments.

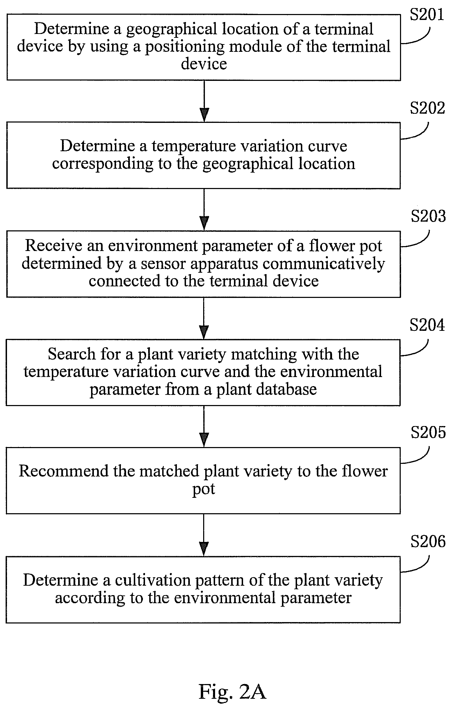

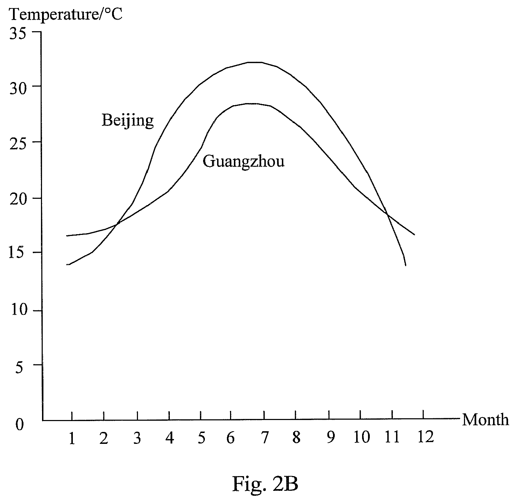

Fig. 2A is a flowchart illustrating a plant variety recommendation method according to an example embodiment 1 of the present disclosure. Fig. 2B is a schematic diagram illustrating a temperature variation curve according to an example embodiment 1 of the present disclosure. In this embodiment, the methods provided by the embodiments of the present disclosure are used, and an illustrative description is given by using recommendation of a plant variety matching with a temperature variation curve and an environmental parameter of a geographical location of a flower pot as an example. As illustrated in Fig. 2A, the method includes the following steps.

In step S201, a temperature variation curve of a geographical location where a terminal device is located is determined.

In one embodiment, the geographical location of the terminal device may be determined by using a positioning module of the terminal device, and then the temperature variation curve corresponding to the geographical location may be determined. For example, after it is determined by using the positioning module of the terminal device that the geographical location of the terminal device is Beijing, the temperature variation curve of Beijing within one year may be acquired from a meteorological service platform, or the temperature variation curve of Beijing within one year may be acquired from a meteorological application (app) of the terminal device. As illustrated in Fig. 2B, temperature variation curves of Guangzhou and Beijing within one year are given. As seen from the temperature variation curves, Guangzhou has experienced smaller temperature variations, whereas Beijing has experienced greater temperature variations. Therefore, plant varieties suitable for the above temperature variations may be determined according to the temperature variation curves.

In step S202, an environmental parameter of the flower pot determined by a sensor apparatus communicatively connected to the terminal device is received.

As illustrated in Fig. 1C, in one embodiment, the sensor apparatus 13 may include a light irradiation sensor, a temperature sensor, and a humidity sensor. The light irradiation sensor is configured to detect a sunshine irradiation duration of the flower pot within one day. The temperature sensor is configured to detect a temperature curve of the flower pot within one day. The humidity sensor is configured to detect a humidity curve of the flower pot within one day. The environmental parameter may include: a sunshine irradiation duration within one day, a highest temperature value and a lowest temperature value within one day, and a maximum humidity value and a minimum humidity value within one day. For example, the sunshine irradiation condition of the location of the flower pot, whether the sunshine is shaded by buildings, and the orientation of the flower pot may be determined according to the sunshine irradiation duration; the temperature and temperature difference of the location of the flower pot may be determined according to the highest temperature value and the lowest temperature value, for example, the flower pot at the top floor of a building is subjected to a great temperature difference, and the indoor flower pot is subjected to a small temperature variation, and the flower pot in the heat-fed room is subjected to a small temperature difference; and the humidity and humidity variation of the location of the flower pot may be determined according to the maximum humidity value and the minimum humidity value, for example, the flower pots in different environments in Beijing are subjected to different humidity conditions.

In step S203, a plant variety matching with the temperature variation curve and the environmental parameter is recommended to the flower pot.

In an embodiment, the plant variety matching with the temperature variation curve and the environmental parameter may be determined based on a plant database. For example, for different flower pots placed in Beijing and Guangzhou, suitable plant varieties may be determined according to their respective different temperature variation curves and recommended to the flower pots. For different flower pots placed in Beijing, since their environmental parameters are different, plant varieties more suitable for the environments of the flower pots may be recommended to the respective flower pots according to the environmental parameters, such that the plants cultivated in the flower pots grow healthily.

In this embodiment, a plant variety matching with the temperature variation curve and the environmental parameter of the environment where the flower pot is located is recommended to the flower pot, such that a user may cultivate a plant matching with the temperature variation curve and the environmental parameter in a flower pot, and hence the plant grows according to growth habits thereof. This prevents the user from frequently buying plants for the same flower pot, and thus reduces the user's economic cost in buying plants. In addition, since the cultivation of the plant completely complies with the growth habits thereof, good growth of the plant may improve the user's enthusiasm in cultivating flowers and plants.

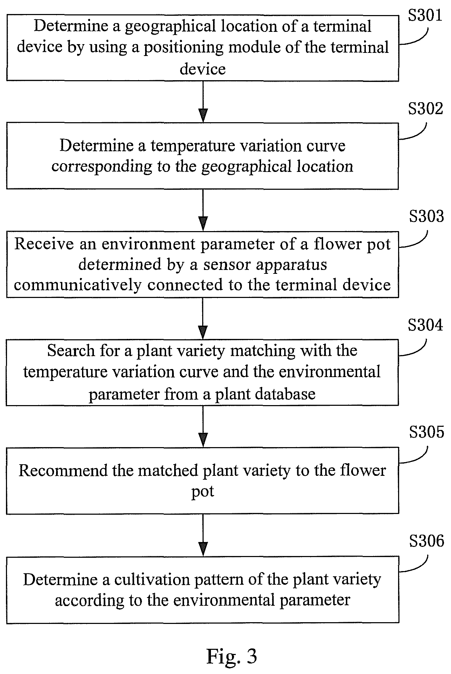

Fig. 3 is a flowchart illustrating a plant variety recommendation method according to example embodiment 2 of the present disclosure. In this embodiment, the methods provided by the embodiments of the present disclosure are used, and an illustrative description is given by using determination of a geographical location of a terminal device via a positioning module of the terminal device, and recommendation of a plant variety matching with an environmental parameter of the flower pot as examples. As illustrated in Fig. 3, the method includes the following steps.

In step S301, a geographical location of a terminal device is determined by using a positioning module of the terminal device.

In one embodiment, the positioning module of the terminal device may be a GPS positioning module or a Beidou navigation positioning module. In another embodiment, when the terminal device is a smart phone, a geographic attribution of a mobile phone number of a user of the smart phone may be positioned based on a WiFi hotspot positioning module of the smart phone, or base station information of the smart phone. In still another embodiment, positioning may also be implemented based on an IP address of the terminal device, and the like. Accordingly, the specific implementation of the positioning module is not limited in the present disclosure, as long as the terminal device can be positioned by using a positioning module.

In step S302, a temperature variation curve corresponding to the geographical location is determined.

In one embodiment, the terminal device may acquire the temperature variation curve corresponding to the geographical location from a meteorological service platform, or may acquire the temperature variation curve corresponding to the geographical location from a server corresponding to a weather application (app) installed on the terminal device. Accordingly, how to specifically acquire the temperature variation curve corresponding to a geographical location is not limited in the present disclosure.

In step S303, an environmental parameter of the flower pot determined by a sensor apparatus communicatively connected to the terminal device is received.

Description of step S303 may be referenced to the description of step S202, which is not described herein any further.

In step S304, a plant variety matching with the temperature variation curve and the environmental parameter is searched from a plant database.

In step S305, a plant variety matching with the flower pot is recommended.

In the above steps S304 and S305, in one embodiment, the plant database may include temperature conditions and ranges of environmental parameters suitable for cultivation of different plants. For example, for aloe, the plant database may at least include the following information: a growth-favorable environmental temperature is 20-30°C, a night optimal temperature is 14-17°C, aloe almost stops growing at a temperature below 10°C, aloe mesophyll would wither to death at a temperature below 0°C, an optimal light irradiation duration is 5-7 hours, and an optimal humidity (illustrative description is given in the present disclosure by using a relative humidity as an example) is 30%-60%. When it is determined that the temperature variation curve and the environmental parameter match with the aloe, related cultivation information of the aloe may be searched from the plant database.

In step S306, a cultivation pattern of the plant variety is determined according to the environmental parameter.

In one embodiment, the cultivation pattern may include cuttage, leaf cutting, seedling cultivation, water culture, soil culture and the like. For example, for the aloe, the user may be recommended to directly buy young aloe and employ the soil culture pattern.

Based on the above embodiments, in this embodiment, a cultivation pattern of a plant variety is determined according to the environmental parameter, such that the user cultivates the plant according to the growth habits better matching with the recommended plant variety. In this way, the cultivation of the plant completely complies with the growth habits thereof, good growth of the plant may be ensured, and the user's enthusiasm in cultivating flowers and plants is improved while the living environment is beautified.

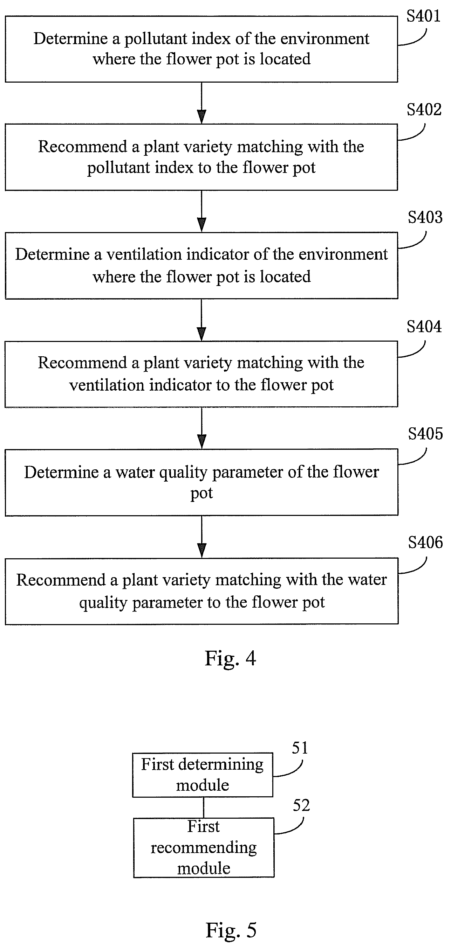

Fig. 4 is a flowchart illustrating a plant variety recommendation method according to example embodiment 3 of the present disclosure. In this embodiment, the methods provided by the embodiments of the present disclosure are used, and an illustrative description is given by using recommendation of a plant variety based on a pollutant index, a ventilation indicator or a water quality parameter as an example. As illustrated in Fig. 4, the method includes the following steps.

In step S401, a pollutant index of the environment where the flower pot is located is determined.

In one embodiment, the pollutant index of the environment where the flower pot is located may be acquired by using a smart air purifier, wherein the pollutant index may include the contents of formaldehyde, benzene series, ammonia and the like substance, and may further include a PM2.5 indicator.

In step S402, a plant variety matching with the pollutant index is recommended to the flower pot.

For example, when the content of formaldehyde in the environment where the flower pot is located reaches a first threshold, the plant variety matching with the formaldehyde indicator may be recommended, for example, the green plants that are highly resistant against formaldehyde, including chlorophytum comosum, aglaonema, hamiltoniana cv.mustrata marginata, ivy stem, aloe, agave, and epipremnum aureum.

In step S403, a ventilation indicator of the environment where the flower pot is located is determined.

In one embodiment, the ventilation indicator of the environment where the flower pot is located may be detected by using a sensor configured in the window. The ventilation indicator includes a ventilation quantity flowing into the room and a ventilation quantity flowing out of the room within one day, based on which the ventilation indicator of the environment where the flower pot is located may be determined.

In step S404, a plant variety matching with the ventilation indicator is recommended to the flower pot.

For example, based on the plant varieties recommended according to the above pollutant index, a plant variety matching with the ventilation indicator may be screened out from the recommended plant varieties, such that the recommended plant variety is finer. For example, among the chlorophytum comosum, aglaonema, hamiltoniana cv.mustrata marginata, ivy stem, aloe, agave, and epipremnum aureum, in a room with a low ventilation index, such green plants as aglaonema and hamiltoniana cv.mustrata marginata that impose not very high requirement on ventilation may be recommended; and in a room with a high ventilation index, such green plants as chlorophytum comosum, agave, ivy stem, aloe and epipremnum aureum that impose high requirement on ventilation may be recommended.

In step S405, a water quality parameter of the flower pot is determined.

In one embodiment, the water quality parameter of the flower pot may be measured by using a water quality monitoring instrument.

In step S406, a plant variety matching with the water quality parameter is recommended to the flower pot.

For example, based on the plant varieties recommended according to the above pollutant index and the ventilation indicator, a plant variety matching with the water quality parameter may be screened out from the recommended plant varieties, such that the recommended plant variety is finer. For example, among the chlorophytum comosum, ivy stem, aloe, agave, and epipremnum aureum, when it is determined that the water quality parameter of the flower pot indicates acid water, such acidophilous green plants as chlorophytum comosum, aloe, ivy stem, and agave may be recommended; when it is determined that the water quality parameter of the flower pot indicates basic water, such basophilous green plants as epipremnum aureum are recommended. A person skilled in the art would understand that the above green plants are only for illustration purpose instead of limitation.

Based on the above embodiments, in this embodiment, by recommending a plant variety matching with the pollutant index, the ventilation indicator and the water quality parameter to the flower pot, the accuracy in recommending the plant variety is improved. In this way, good growth of the plant during the entire cultivation process may be ensured, and the user's enthusiasm in cultivating flowers and plants is improved while the living environment is beautified.

Fig. 5 is a block diagram illustrating a plant variety recommendation apparatus according to an example embodiment of the present disclosure. As illustrated in Fig. 5, the plant variety recommendation apparatus includes:
a first determining module 51, configured to determine an environmental parameter of a flower pot; and
a first recommending module 52, configured to recommend a plant variety matching with the environmental parameter determined by the first determining module 51 to the flower pot.

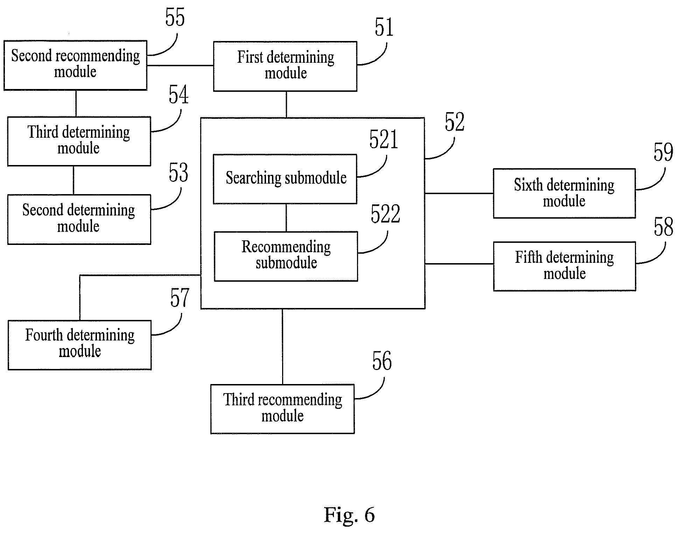

Fig. 6 is a block diagram illustrating another plant variety recommendation apparatus according to an example embodiment of the present disclosure. Based on the embodiment as illustrated in Fig. 5, in one embodiment, the apparatus may further include:
a second determining module 53, configured to determine a geographical location of the flower pot;
a third determining module 54, configured to determine a temperature variation curve corresponding to the geographical location determined by the second determining module 53; and
a second recommending module 55, configured to recommend a plant variety matching with the temperature variation curve determined by the third determining module 54 and the environment parameter determined by the first determining module 51 to the flower pot.

In one embodiment, the first recommending module 52 may include:
a searching submodule 521, configured to search for a plant variety matching with the environmental parameter determined by the first determining module 51 from a plant database; and
a recommending submodule 522, configured to recommend the matched plant variety searched by the searching submodule 521 to the flower pot.

In one embodiment, the apparatus may further include:
a third recommending module 56, configured to determine a cultivation pattern of the plant variety according to the environmental parameter determined by the first determining module 51.

In one embodiment, the apparatus may further include:
a fourth determining module 57, configured to determine a pollutant index of the environment where the flower pot is located; and
a first recommending module 52, configured to recommend a plant variety matching with the pollutant index determined by the fourth determining module 57 to the flower pot.

In one embodiment, the apparatus may further include:
a fifth determining module 58, configured to determine a ventilation indicator of the environment where the flower pot is located; and
a first recommending module 52, configured to recommend a plant variety matching with the ventilation indicator determined by the fifth determining module 58 to the flower pot.

In one embodiment, the apparatus may further include:
a sixth determining module 59, configured to determine a water quality parameter of the flower pot; and
a first recommending module 52, configured to recommend a plant variety matching with the water quality parameter determined by the sixth determining module 59 to the flower pot.

With respect to the apparatuses in the above embodiments, the specific implementations of operations executed by various modules thereof have been described in detail in the embodiments illustrating the methods, which are not described herein any further.

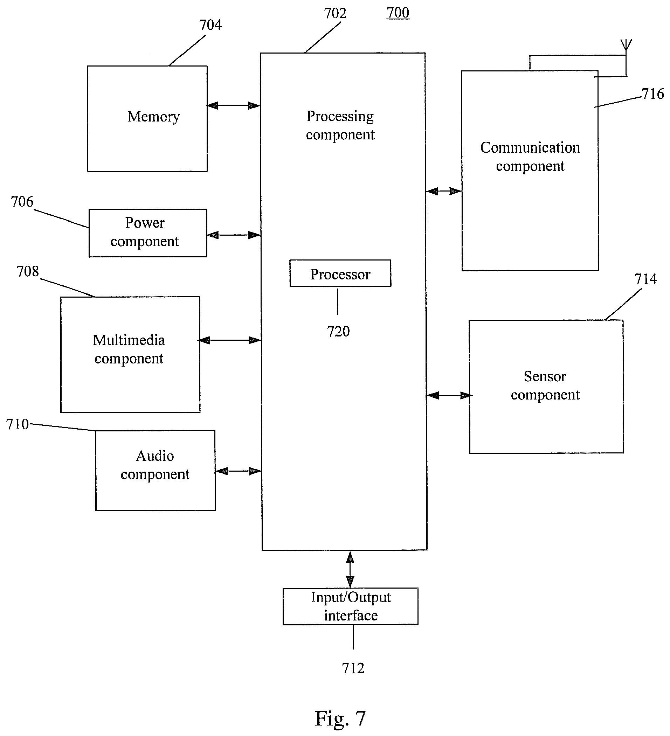

Fig. 7 is a block diagram illustrating an apparatus for use in plant variety recommendation according to an example embodiment of the present disclosure. For example, the apparatus 700 may be a mobile phone, a computer, a digital broadcast terminal, a messaging device, a gaming console, a tablet, a medical device, exercise equipment, a personal digital assistant, and the like.

Referring to Fig. 7, the apparatus 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the apparatus 700, such as the operations associated with display, telephone calls, data communications, camera operations, and recording operations. The processing component 702 may include one or more processors 720 to execute instructions to perform all or a part of the steps in the above-described methods. In addition, the processing component 702 may include one or more modules which facilitate the interaction between the processing component 702 and other components. For example, the processing component 702 may include a multimedia module to facilitate the interaction between the multimedia component 708 and the processing component 702.

The memory 704 is configured to store various types of data to support the operations of the apparatus 700. Examples of such data include instructions for any application or method operated on the apparatus 700, contact data, phonebook data, messages, pictures, videos, and the like. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the apparatus 700. The power component 706 may include a power management system, one or more power supplies, and other components associated with the generation, management, and distribution of power in the apparatus 700.

The multimedia component 708 includes a screen providing an output interface between the apparatus 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and/or the rear camera may receive external multimedia data while the apparatus 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone (MIC) configured to receive an external audio signal when the apparatus 700 is in an operation mode, such as a call mode, a recording mode, or a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and a peripheral interface module, such as a keyboard, a click wheel, a button, or the like. The buttons may include, but are not limited to, a home button, a volume button, a starting button, and a locking button.

The sensor component 714 includes one or more sensors to provide status assessments of various aspects of the apparatus 700. For example, the sensor component 714 may detect an open/closed status of the apparatus 700, relative positioning of components, e.g., the display and the keypad, of the apparatus 700, a change in position of the sensor component 714 or a component of the apparatus 700, a presence or absence of user contact with the apparatus 700, an orientation or an acceleration/deceleration of the apparatus 700, and a change in temperature of the apparatus 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communications, wired or wirelessly, between the apparatus 700 and other devices. The apparatus 700 may access a wireless network based on a communication standard, such as WiFi, 2G, or 3G, or a combination thereof. In one example embodiment, the communication component 716 receives a broadcast signal or broadcast associated information from an external broadcast management system via a broadcast channel. In one example embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the apparatus 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In example embodiments, there is also provided a non-transitory computer-readable storage medium including instructions, such as included in the memory 704, executable by the processor 720 in the apparatus 700, for performing the above-described methods. For example, the non-transitory computer-readable storage medium may be a ROM, a random access memory (RAM), a compact disc read-only memory (CD-ROM), a magnetic tape, a floppy disc, an optical data storage device, or the like.

Other embodiments of the present disclosure will be apparent to those skilled in the art from consideration of the specification and practice disclosed herein. This application is intended to cover any variations, uses, or adaptations of the present disclosure following the general principles thereof and including such departures from the present disclosure as coming within common knowledge or customary technical means in the art. It is intended that the specification and embodiments be considered as exemplary only, with a true scope and spirit of the present disclosure being indicated by the appended claims.

It will be appreciated that the present disclosure is not limited to the exact construction that has been described above and illustrated in the accompanying drawings, and that various modifications and changes can be made without departing from the scope thereof. The scope of the present disclosure is only defined by the appended claims.

## Claims

1. A plant variety recommendation method, comprising:
determining (S101) an environmental parameter of an environment where a flower pot is located; and
recommending (S102) a plant variety matching with the environmental parameter to the flower pot.

2. The method according to claim 1, wherein the method further comprises:
determining (S201, S301) a geographical location of the flower pot;
determining (S202, S302) a temperature variation curve corresponding to the geographical location; and
recommending a plant variety matching with the temperature variation curve to the flower pot.

3. The method according to claim 1, wherein the recommending (S102) a plant variety matching with the environmental parameter to the flower pot comprises:
searching (S204, S304) for a plant variety matching with the environmental parameter from a plant database; and
recommending (S205, S305) the matched plant variety to the flower pot.

4. The method according to claim 1, wherein the method further comprises:
determining (S206, S306) a cultivation pattern of the plant variety according to the environmental parameter.

5. The method according to claim 1, wherein the method further comprises:
determining (S401) a pollutant index of the environment where the flower pot is located; and
recommending (S402) a plant variety matching with the pollutant index to the flower pot.

6. The method according to claim 1, wherein the method further comprises:
determining (S403) a ventilation indicator of the environment where the flower pot is located; and
recommending (S404) a plant variety matching with the ventilation indicator to the flower pot.

7. The method according to claim 1, wherein the method further comprises:
determining (S405) a water quality parameter of the flower pot; and
recommending (S406) a plant variety matching with the water quality parameter to the flower pot.

8. A plant variety recommendation apparatus, comprising:
a first determining module (51), configured to determine an environmental parameter of a flower pot; and
a first recommending module (52), configured to recommend a plant variety matching with the environmental parameter determined by the first determining module to the flower pot.

9. The apparatus according to claim 8, wherein the apparatus further comprises:
a second determining module (53), configured to determine a geographical location of the flower pot;
a third determining module (54), configured to determine a temperature variation curve corresponding to the geographical location determined by the second determining module; and
a second recommending module (55), configured to recommend a plant variety matching with the temperature variation curve determined by the third determining module to the flower pot.

10. The apparatus according to claim 8, wherein the first recommending module (52) comprises:
a searching submodule (521), configured to search for a plant variety matching with the environmental parameter determined by the first determining module from a plant database; and
a recommending submodule (522), configured to recommend the matched plant variety searched by the searching submodule to the flower pot.

11. The apparatus according to claim 8, wherein the apparatus further comprises:
a third recommending module (56), configured to determine a cultivation pattern of the plant variety according to the environmental parameter determined by the first determining module.

12. The apparatus according to claim 8, wherein the apparatus further comprises:
a fourth determining module (57), configured to determine a pollutant index of the environment where the flower pot is located; and
the first recommending module (52) is configured to recommend a plant variety matching with the pollutant index determined by the fourth determining module to the flower pot.

13. The apparatus according to claim 8, wherein the apparatus further comprises:
a fifth determining module (58), configured to determine a ventilation indicator of the environment where the flower pot is located; and
the first recommending module (52) is configured to recommend a plant variety matching with the ventilation indicator determined by the fifth determining module to the flower pot.

14. The apparatus according to claim 8, wherein the apparatus further comprises:
a sixth determining module (59), configured to determine a water quality parameter of the flower pot; and
the first recommending module (52) is configured to recommend a plant variety matching with the water quality parameter determined by the sixth determining module to the flower pot.

15. An apparatus for use in plant variety recommendation, comprising:
a processor (720); and
a memory (704) for storing instructions executable by the processor (720);
wherein the processor (720) is configured to:
determine an environmental parameter of an environment where a flower pot is located; and
recommend a plant variety matching with the environmental parameter to the flower pot.

16. A computer program including instructions for executing the steps of a plant variety recommendation method according to any one of claims 1 to 7 when said program is executed by a computer.
